# EUROPEAN PATENT APPLICATION

(11) **EP 0 541 357 A2**
(43) Date of publication of application: **12.05.1993**
(21) Application number: 92310112.5
(22) Date of filing: 04.11.1992
(51) Int. Cl.: G06K 7/12, G06K 19/06

(54) **Invisible or low visibility coded indicia system**

(30) Priority: 04.11.1991 US 787070
(71) Applicant: Bianco, James Salvatore, Enfield, CT 06082 (US)
(72) Inventor: Bianco, James Salvatore, Enfield, CT 06082 (US)
(74) Representative: Blatchford, William Michael

(57) **Abstract**

In one preferred embodiment, a method of identifying a document having top and bottom surfaces, comprising: printing on a portion of one of the surfaces of the document a pattern of spaced apart opaque areas arranged in a selected pattern, the opaque areas being separated by less opaque areas and the opaque and the less opaque areas being of substantially the same visual color; directing a beam of light against the bottom surface; moving the coded indicia relative to, and through, the beam of light; and detecting the selected pattern by detecting when transmission of the beam of light through the document is blocked by the opaque areas and detecting when the light is transmitted through the less opaque areas between the opaque areas. In another preferred embodiment, method of identifying a document having a surface, comprising; placing on the surface of the document a pattern of alternating smooth and matte areas of substantially the same visual color arranged in a selected pattern; directing a beam of light against the surface; moving the document relative to the beam of light; and detecting the selected pattern by detecting when the beam of light is reflected by the smooth areas and when the beam of light is scattered by the matte areas.

## Description

### BACKGROUND OF THE INVENTION

### 1. Field of the Invention.

The present invention relates to coded indicia generally and, more particularly to a novel article having indicia that are invisible, or nearly so, to the human eye and an apparatus and method for reading the indicia.

### 2. Background Art.

Coded indicia are widely used for various purposes and are frequently machine readable coded indicia to rapidly convoy information. Often, these indicia take the form of bar codes printed on a label, identification card, or other medium, the bar codes comprising a pattern of areas of varying print contrast ratios. The print contrast ratio between a "bar" and a "space" is usually about 4:1. The widths of the bars and spaces "read" and decoded by optical means.

In many cases, human readable material on the medium occupies most or all of the medium, thus limiting the area available for printing of a bar code. In some cases, the bar code is considered esthetically undesirable. Falling in the latter category, for example, are travelers checks.

There is a need to automatically identify documents such as travelers checks as they are being issued by automatic teller machines. The present method of identifying a travelers check is by reading a magnetic ink character recognition (MICR) symbol on the lower left hand corner of the travelers check. Because of the present method of handling, it would be very difficult and costly to read the MICR code in existing automatic teller machines. Therefore, the need has arisen to find an alternative coding means that may be used in such dispensing machines and in particular those dispensing machines existing today.

There have been attempts to apply a standard bar code to the rear surface of the travelers check. These bar codes, which are black on white, have proved to be very effective and are within the economic justification range when used with existing hardware technology. These bars are read by the conventional method of directing a light toward the bar code and detecting the resulting pattern of reflectance and non-reflectance as the bar code is moved relative to the detector. However, the black bars on the travelers check detract from its appearance and are, therefore, cosmetically unacceptable. It in highly desirable to use a bar code technology but to have the bar code invisible to the naked human eye.

In a recent improvement, attempts have been made in which bar codes are printed using an ink which dries clear to the naked eye, but, when exposed to the proper lights source, fluoresces in a wave length that can be detected by a sensor of the same wave length. The difficulty associated with using such invisible ink in the above application is that the bar code readers required are quite sophisticated and costly.

Accordingly, it is a principal object of the present invention to provide coded indicia which are invisible, or nearly so, to the naked eye but which can be read using economical conventional equipment.

It is another object of the invention to provide such coded indicia which can be easily and economically applied.

Other objects of the present invention, as well as particular features, elements, and advantages thereof, will be elucidated in, or be apparent from, the following description and the accompanying drawing figures.

### SUMMARY OF THE INVENTION

The present invention achieves the above objects, among others by providing, in one preferred embodiment, a method of identifying a document having top and bottom surfaces, comprising: printing on a portion of one of said surfaces of said document a pattern of spaced apart opaque areas arranged in a selected pattern, said opaque areas being separated by less opaque areas and said opaques and said less opaque areas being of substantially the same visual color; directing a beam of light against said bottom surface; moving said coded indicia relative to, and through, said beam of light; and detecting said selected pattern by detecting when transmission of said beam of light through said document is blocked by said opaque areas and detecting when said light is transmitted through said less opaque areas between said opaque areas. In another preferred embodiment, method of identifying a document having a surface, comprising: placing on said surface of said document a pattern of alternating smooth and matte areas of substantially the same visual color arranged in a selected pattern; directing a beam or light against said surface; moving said document relative to said beam of light; and detecting said selected pattern by detecting when said beam of light is reflected by said smooth areas and when said beam of light is scattered by said matte areas.

### BRIEF DESCRIPTION OF THE DRAWING

Understanding of the present invention and the various aspects thereof will be facilitated by reference to the accompanying drawing figures, submitted for purposes of illustration only and not intended to define the scope of the invention, in which:
Figures 1 and 1(A) are top plan views of travelers checks including bar code indicia printed thereon.
Figure 2 is a side elevational view of one apparatus to read the bar code indicia of Figure 1, according to the present invention.
Figure 3 is a perspective view of the apparatus of Figure 2.
Figures 4 and 4(A) are side elevational views illustrating how the apparatus of Figures 2 and 3 reads bar codes.
Figures 5 and 5(A) are side elevational views illustrating an alternative embodiment of the present invention.

### DETAILED DESCRIPTION OF THE PREFERRED EMBODIMENTS

Reference should now be made to the Drawing in which similar or identical elements are given consistent identifying numerals throughout the various figures thereof and in which parenthetical references to figure numbers direct the reader to the view(s) in which the element(s) being described is (are) best seen, although the element(s) may be seen also in other views.

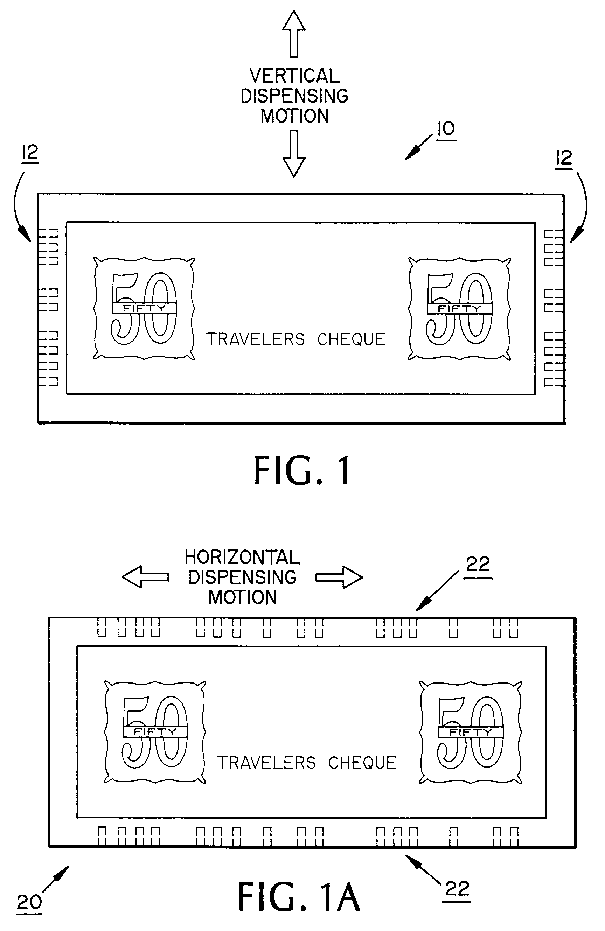

Figure 1 depicts a standard travelers check, generally indicated by the reference numeral 10, having bar codes 12 printed along the side edges or the travelers check. Figure 1(A) also depicts a standard travelers check, generally indicated by the reference numeral 20, having bar codes 22 printed along the top and bottom edges of the travelers check. Bar codes 12 and 20 have patterns representing the MICR number of the travelers check and are illustrated in broken lines to indicate that they are invisible to the naked eye, as is more fully described below. Which of the alternative positioning of bar codes 12 and 20 is chosen depends on whether the travelers check is transported in the automatic teller machine with vertical or horizontal motion as is indicated on Figures 1 and 1(A) and whether a single detector or a linear array is employed to read the bar code. A single detector would be employed in the case of Figure 1. In the case of Figure 1(A), a single detector would be employed to read bar codes 22 when travelers check 20 is transported in the horizontal direction and a linear array of detectors would be employed to read the bar codes when the travelers check is transported in the vertical direction.

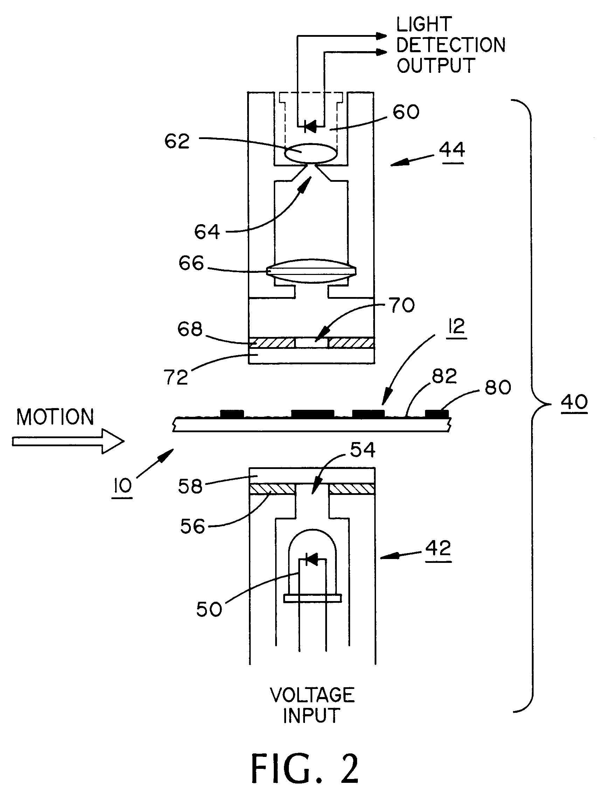

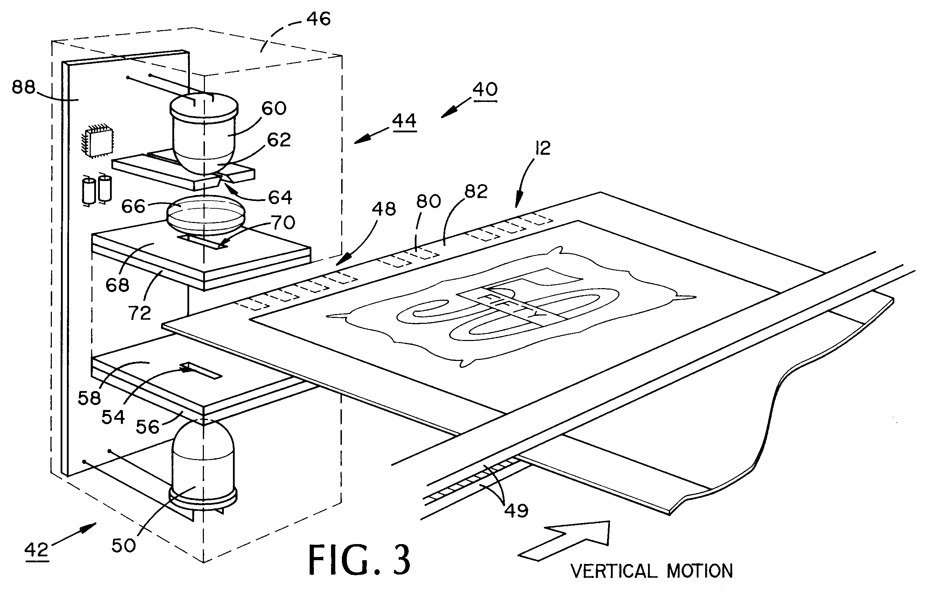

Reference should now be made to Figures 2 and 3 whereon there is illustrated bar code 12 on travelers check 10 being read by a reading apparatus, generally indicated by the reference numeral 40. Apparatus 40 includes a light emitting assembly 42 disposed below travelers check 10 and a light sensing assembly 44 disposed above the travelers check, the light emitting and light sensing assemblies being disposed in a common housing 46 (Figure 3). Housing 46 includes an opening defined therein through which travelers check 10 is conveyed by conveyor belts 49 by conventional means.

Light emitting assembly 42 includes a light source, such as a light emitting diode 50, the wave length of which light may be in either the visible or infrared regions depending on the application. Light from diode 50 is directed upwardly through a slit 54 in an opaque layer 56 disposed above the diode, the slit being provided to allow only a bar of light from the diode to be projected onto the bottom of travelers check 10. A protective clear window 58 is disposed above opaque layer 56.

Light sensing assembly 44 includes a photo diode 60 which is sensitive to light waves emitted from light emitting diode 50. Included integrally with photo diode 60 is a focussing lens 62 and in front of the lens is a slit 64 which allows the photo diode to see only a portion of a bar of bar code 12. A second lens 66 external to photo diode 60 is provided to focus light on slit 64. An opaque layer 68 with yet another slit 70 is provided, with the latter slit having a width approximately equal to the narrowest bar size to prevent stray light from diminishing the detection of bars. A protective clear window 72 is disposed over opaque layer 60. Light sensing assembly 44 is similar to that described in US Patent No. 4,816,659, issued March 28, 1989, to James S. Bianco et al, and titled BAR CODE READER HEAD, the disclosure of which is incorporated by reference hereinto.

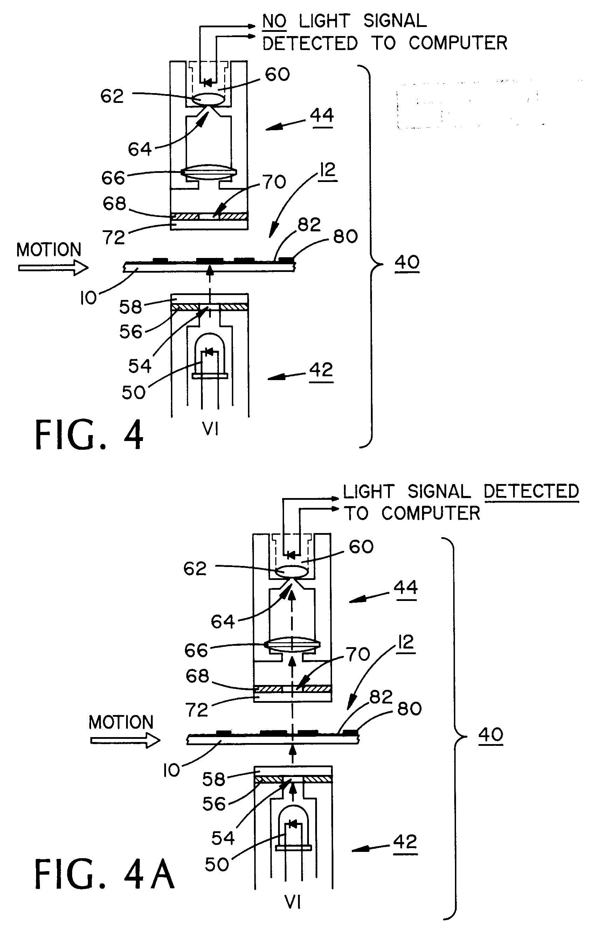

Reference also now to Figures 4 and 4(A) will aid in understanding the present invention. Bar code 12 includes bars (greatly exaggerated in thickness), as at 80, of a visual color substantially the same as the background 82 on the portion of travelers check 10 on which they are printed and having an opacity substantially less than the opacity of that portion of the travelers check. Thus, bars 80 are visually invisible, or nearly so, to the naked eye. As travelers check 10 is moved by conveyor bolts 49 of the automatic teller machine dispenser (not shown), it passes through opening 48 between light emitting assembly 42 and light sensing assembly (Figure 3). Light emitted by light emitting assembly 42 is directed toward the bottom of travelers check 10; however, the light is blocked by opaque layer 56 in all areas except where slit 54 allows a bar of light to be projected onto the bottom of the travelers check, the bar of light being parallel to bars 80. As a bar 80 passes between light emitting assembly 42 and light sensing assembly 44, it blocks the bar of light so that little or no light is received by the light sensing assembly. As the travelers check continues to move in the direction indicated on Figures 4 and 4(A), the bar of light penetrates a space between bars 80 (Figure 4(A) and is sensed by photo diode 60. This causes a change in the output signal sent to the computer (not shown). By the patterns of bars and spaces printed on the check, the computer will be able to determine the number assigned to travelers check 10. Electronic circuitry used for amplifying the signals is mounted on printed circuit board 88 in housing 46 (Figure 3).

It will be understood that apparatus 40 can read bar code 12 regardless of whether the bar code is printed on the top or the bottom of travelers check 10. This is an important feature of the invention. Since bar codes conventionally have start and stop characters at the beginning and ends thereof, respectively, the bar codes can be read either forwards or backwards. Therefore, apparatus 40 can read bar code 12 regardless of whether travelers check 10 is right-side-up, up-side-down, and/or rotated 180 degrees. This feature solves the problem of some or all of a stack of travelers checks being loaded into the teller machine in improper orientation.

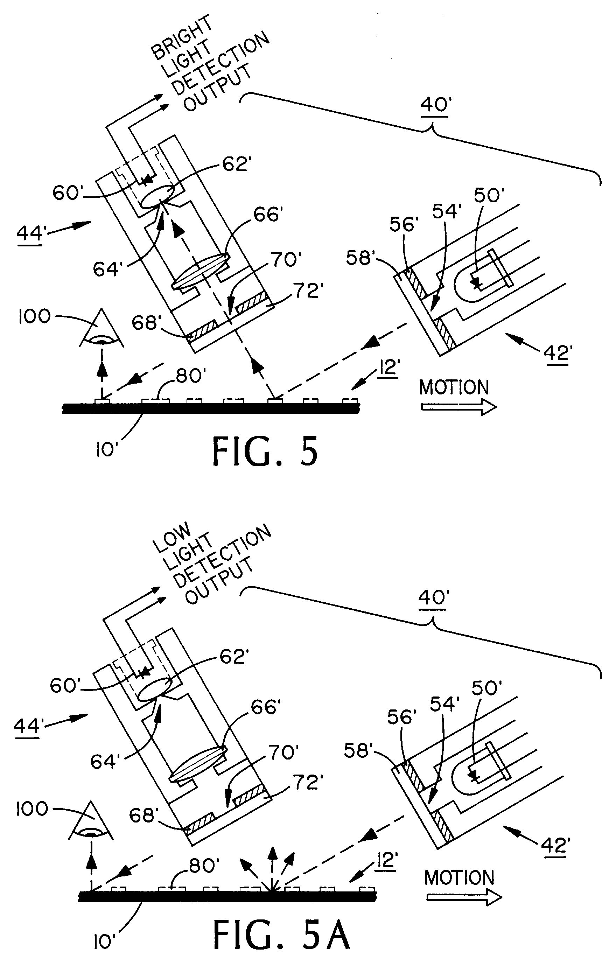

While the embodiment of the present invention described above and shown on Figures 2-4(A) is quite satisfactory in many applications, in some case it may be impossible to place a light source underneath the document or the document may be too opaque to transmit light therethrough in the open spaces. An embodiment of the present invention directed to such cases, is illustrated on Figures 5 and 5(A) and described below.

Figures 5 and 5(A) show bar code reading apparatus 40' having a light emitting assembly 42' and a light sensing assembly 44' disposed on the same side of a travelers check 10' as is printed a bar code 12' having bars (greatly exaggerated in thickness), as at 80'. It can be seen that the path of light from light emitting source 42' and the path; of light reflected toward light sensing assembly are approximately orthogonal to one another and intersect the plane of travelers check 10' at approximately 45-degree angles. Bars 80', rather than being opaque, as in bar code 80 above, are clear. Thus, when viewed by a naked eye 100, especially from straight on, bars 80' are invisible, or nearly so, since the color of the substrate is viewed through the clear bars.

In order that bars 80' can be read by apparatus 40', the reflectance of the bars must be different from the background on which they are printed. Two situations are possible: the background may have either a matte or a smooth surface. When the background has a matte surface, bars 80' may be formed smooth by printing the same with a clear acrylic material. If the background has a smooth surface, a matte surface may be screened on and then the smooth bars applied. Alternatively, in the latter case, the bars may have a matte surface. In any case, what is read as being the "bars" 80' of bar code 12' may be matte or smooth.

Light sensing assembly 44' of apparatus 40', then, distinguishes between a smooth surface which acts like a mirror and provides a high reflectance of the light emitted from light emitting assembly 42', as illustrated on Figure 4, and a matte surface which scatters the emitted light, as is illustrated on Figure 4(A)f. In the latter case, only a small portion of the light is reflected to the light sensing assembly, thus allowing it to distinguish between a bar and a apace. The resulting output of light sensing assembly 44', as travelers check 10' is moved relative to the light sensing assembly, is identical to that which would be produced when, reading a conventional bar code having opaque bars.

The present invention provides an invisible bar code and a reading apparatus therefor formed of relatively conventional materials and components and, therefore, avoids the use of special inks and readers. Apparati 40 and 40' can be incorporated easily into existing equipment such as automatic teller dispensing machines.

It will thus be seen that the objects set forth above, among those elucidated in, or made apparent from, the preceding description, are efficiently attained and, since certain changes may be made in the above construction without departing from the scope of the invention, it is intended that all matter contained in the above description or shown on the accompanying drawing figures shall be interpreted as illustrative only and not in a limiting sense.

It is also to be understood that the following claims are intended to cover all of the generic and specific features of the invention herein described and all statements of the scope of the invention which, as a matter or language, might be said to fall therebetween.

## Claims

1. An apparatus for reading coded indicia printed on a document having top and bottom surfaces, said coded indicia comprising a pattern of spaced apart opaque areas of substantially the same visual color as the background of the portion said document on which they are printed, said opaque areas being separated by less opaque areas of said portion, said apparatus comprising:
(a) a light source disposed beneath said document to direct a beam of light against said bottom surface;
(b) a light detector disposed above said document such as to detect said beam of light from said light source when said beam of light is transmitted through said less opaque areas; and
(c) said light source being disposed such that, with relative movement of said coded indicia with respect to said light source and said light detector and through said light beam, said light detector can distinguish between said opaque areas which block transmission of light from said light source to said light detector and said less opaque areas which permit transmission of said light from said light source to said light detector through said document.

2. An apparatus, as defined in claim 1, wherein said light beam is orthogonal to the plane of said document

3. An apparatus, as defined in Claim 1, wherein said pattern comprises a bar code pattern.

4. A method of identifying a document having top and bottom surfaces, comprising:
(a) printing on a portion of one of said surfaces of said document a pattern of spaced apart opaque areas arranged in a selected pattern, said opaque areas being separated by less opaque areas, and said opaque areas being of substantially the same visual color as said portion of one of said surfaces;
(b) directing a beam of light against said bottom surface;
(c) moving said coded indicia relative to, and through, said beam of light; and
(d) detecting said selected pattern by detecting when transmission of said beam of light through said document is blocked by said opaque areas and detecting when said light is transmitted through said less opaque areas between said opaque areas.

5. A method, as defined in Claim 4, further comprising directing said light beam orthogonally to the plane of said document.

6. A method, as defined in Claim 4, further comprising providing said pattern as a bar code pattern.

7. An apparatus for reading coded indicia printed on a surface of a document, said coded indicia comprising a pattern of alternating smooth and matte areas of substantially the same visual color, said apparatus comprising:
(a) a light source disposed above said surface to direct a beam of light against coded indicia;
(b) a light detector disposed above said surface so as to detect said beam of light reflected from, said light source by said smooth areas; and
(c) said light source being disposed such that, with relative movement of said coded indicia with respect to said light source and said light detector, said light detector can distinguish between said smooth areas which reflect light from said light source to said light detector and said matte areas of said coded indicia between said smooth areas which matte areas scatter said light from said light source.

8. An apparatus, as defined in Claim 7, wherein said beam of light is directed against said coded indicia at an acute angle to the plane of said document.

9. An apparatus, as defined in Claim 8, wherein said angle is a 45 degree angle.

10. An apparatus, as defined in Claim 7, wherein said pattern comprises a bar code pattern.

11. A method of identifying a document having a surface, comprising:
(a) placing on said surface of said document a pattern of alternating smooth and matte areas of substantially the same visual color arranged in a selected pattern;
(b) directing a beam of light against said surface;
(c) moving said document relative to said beam of light; and
(d) detecting said selected pattern by detecting when said beam of light is reflected by said smooth areas and when said beam of light is scattered by said matte areas.

12. A method, as defined in Claim 11, further comprising directing said light beam against said coded indicia at an acute angle to the plane of said document.

13. A method, as defined in Claim 12, wherein said acute angle is a 45 degree angle.

14. A method, as defined in Claim 11, further comprising providing said pattern as a bar code pattern.

15. A document having coded indicia, said coded indicia comprising a pattern of opaque areas printed on a portion of a surface of said document, said opaque area having substantially the same visual color as the visual color of said portion and having an opacity substantially less than that of said portion.

16. A document, as defined in Claim 15, wherein said pattern comprising a bar code pattern.

17. A document having coded indicia, said coded indicia comprising a pattern of smooth and matte areas printed on a portion of a surface of said document, said smooth and matte areas having substantially the same visual color.

18. A document, as defined in Claim 17, wherein said pattern comprises a bar code pattern.
